# EUROPEAN PATENT APPLICATION

(11) **EP 3 992 450 A1**
(43) Date of publication of application: **04.05.2022**
(21) Application number: 21205042.1
(22) Date of filing: 27.10.2021
(51) Int. Cl.: F03C 1/03, F03G 7/06, F16K 31/122

(54) **BISTABLE ACTUATOR**

(30) Priority: 27.10.2020 IT 202000025483
(71) Applicant: Riccio, Anniello, 81041 Vitulazio CE (IT)
(72) Inventor: RICCIO, Aniello, 81041 VITULAZIO (IT); SAPUTO, Salvatore, 81047 Macerata Campania (CE) (IT); SELLITTO, Andrea, 81031 Aversa (CE) (IT)
(74) Representative: Conti, Marco

(57) **Abstract**

Bistable actuator (10) connectable to a device to be actuated, said actuator comprising an actuation module (1) for moving the device between a first state of actuation and a second state of actuation, wherein said actuation module (1) comprises a central body (6) sliding inside an external frame (5), a first thrust component that can be activated to generate a first thrust force acting on the central body (6) and to move the device in the first state of actuation and a second thrust component that can be activated to generate a second thrust force acting on the central body (6) in the opposite direction to said first thrust force and to move the device into the second actuation state and a transmission element (3) in mechanical connection with the central body and which can be coupled to the device to be actuated to transmit to said device the first or second thrust force generated by the first or second thrust component, respectively, wherein the transmission element (3) is configured to switch said first or second thrust force into an axial movement or a rotary moment to be transmitted to the device to be activated by passing from the first to the second actuation state and vice versa. The actuator also comprises a blocking module (2) to generate a contrast force on the central element (6) and to keep the device to be actuated in the first or second actuation state, even in the absence of activation of the first and/or second thrust component. FIGURE 14a

## Description

This invention relates to a mechanical actuation device. In particular, the invention relates to a axial/rotary synchronous bistable actuator which can be connected to one or more devices to be actuated.

The recent technological development aimed at increasingly "intelligent" or "smart" systems and with adaptive characteristics, which require the increasingly greater use of sensors, actuators and microcontrollers for their operation. This, on the other hand, is followed by an unwanted increase in the weight and volume of the relative components.

In order for these intelligent and/or adaptive systems to be competitive on the market, it is necessary to overcome the current requirements linked to the use of electromagnetic hydraulic actuators, whether they are of a technical type (overall dimension, weight) or commercial type (operating costs). This problem is particularly felt in the transport sector, such as, for example, automotive or aeronautical transport, where an increase in weight is directly linked to an increase in fuel consumption or, consequently, a reduction in the payload.

Currently, by way of example, there are hundreds of actuation tasks performed with conventional electromagnetic motors on a vehicle, which are not optimised in terms of weight and volume, showing a relatively low technical progress.

As an alternative to the conventional actuating devices, it is possible to use actuation systems based on shape memory alloys. In this way, it is possible to reduce the complexity of the systems used, with a consequent reduction in weight with respect to the traditional magnetoelectric and hydraulic activation systems. Shape memory materials are metal alloys which are able to store a predetermined structural shape, to which they return when there is a change of state induced by reaching a predetermined temperature which depends on the composition of the alloy. In other words, these materials can return to their original shape even after deformations which substantially change the shape, simply by means of a heating process. The latter may occur by directly immersing the shape memory alloy in a thermal flow or following a passage of electric current therein (Joule effect).

For their operation, the actuators based on shape memory alloy require a shape memory alloy component, designed to generate the desired force, and an antagonist component, which may also be made of a shape memory alloy. In order to keep the device in the actuated position, the component made of shape memory alloy must remain at a temperature greater than that necessary to induce the change of state. This may lead to a decrease in its useful life, due to the high and continuous mechanical and thermal stresses to which the shape memory alloy component is subjected to, and a high electrical consumption, if the actuation occurs by the passage of current.

Moreover, the basic idea of a bistable actuation system, which is almost unavoidable for actuators based on shape memory alloys, brings benefits in terms of reduction of weight and constructional complexity even when applied to traditional actuators. For example, in the case of traditional devices based on hydraulic or pneumatic actuation, the concept of bistability allows the actuation state to be maintained without necessarily having to keep constant the pressure difference of the fluid necessary for the actuation. Maintaining this constant pressure difference for long periods may be onerous for the system and result in an increase in energy consumption.

Some bistable axial or rotary actuation devices are present in the international panorama, such as US 2008/0307786 A1 (Hafez Moustapha [FR] et al.), WO 90/15928 A1 (Johnson Service Co [US]) and CN 107 339 464 A (Nantong Polytechnic Intelligent Manufacturing Tech Co. LTD et al.). These devices, even though characterised by the bistability associated with the presence of shape memory alloy actuators, have the distinctive feature of actuating in a single direction, axial or rotary. Moreover, the blocking action is performed exclusively by elastic elements which cannot be modulated on the basis of variable actuation forces, which are characteristic of various operating conditions.

For this reason, the aim of the invention is to provide a bistable actuation device which overcomes partly or completely the above-mentioned drawbacks of the prior art devices and methods. In particular, the aim of the invention is to provide an actuation device which is structurally simple, light and compact, whilst at the same time maintaining high levels of efficiency and reliability.

These aims are achieved by an actuator according to the claims at the end of this description.

The actuator according to the invention comprises an actuation module for moving the device to be actuated between (at least) a first actuation state and a second actuation state. More specifically, the actuation module comprises a central body slidable inside (that is, relative to) an external frame.

The actuation module comprises a first thrust component which can be activated to generate a first thrust force acting on the central body and to move the device in the first actuation state.

The actuation module comprises a second thrust component which can be activated to generate a first thrust force acting on the central body and to move the device in the second actuation state. The second thrust force acts in the opposite direction to the first thrust force.

The actuator also comprises a transmission element which is mechanically connected to the central body. The transmission element can be coupled to the device to be actuated for transmitting to this device the first and/or the second thrust force generated, respectively, by the first and/or the second thrust component. The transmission element is configured for switching the first and/or second thrust force into an axial movement and/or a rotary movement to be transmitted to the device to be actuated in the passage from the first to the second actuation state and vice versa.

It should be noted that the expression "mechanically connected" means that the transmission element may be in direct contact with said central body or in indirect contact with it such as to guarantee a transmission of mechanical forces. In other words, there may be a direct connection between the transmission element and the central body or additional elements may be inserted which transfer a predetermined movement.

For this reason, the invention provides the following embodiments:
- a first embodiment, wherein the transmission element is configured for switching (transferring, transmitting) the motion of the central body into a translational motion of a component which can be associated with the transmission element;
- a second embodiment, wherein the transmission element is configured for switching (transferring, transmitting, transforming) the motion (translation) of the central body into a rotational motion of a component which can be associated with the transmission element;
- a third embodiment, wherein the transmission element is configured for switching (transferring, transmitting, transforming) the motion of the central body into a roto-translational motion of a component which can be associated with the transmission element, which therefore roto-translates.

Moreover, according to a further and preferred embodiment, wherein the actuator comprises an additional transmission element, the transmission element is configured for switching the translational motion of the central body into a translational motion of a first unit actuated and the additional transmission element is configured to switch the translational motion of the central body into a rotary motion of a second unit actuated. According to this embodiment, the transmission element may also be defined as the translational transmission element whilst the additional transmission element may be defined as rotary transmission element.

This embodiment is very advantageous because, starting from a single member, it allows two different types of actuation to be obtained.

It is not excluded that the additional transmission element can also be configured for transferring a translational motion, allowing an advantageous device to be obtained, since it allows two elements to be actuated starting from the sliding of a single central body.

According to an advantageous aspect of the invention, the actuator according to the invention is characterised by a blocking module, configured to generate a contrast force on the central element, in such a way as to keep the device in the first and/or in the second actuation state, even in the absence of the activation of the first and/or the second thrust component. More specifically, the blocking module is configured for contrasting the predetermined internal forces of the actuation module and the external forces acting on the device to be actuated, in such a way as to maintain the desired actuation state.

According to an embodiment, the blocking module is a modular blocking module (that is, adjustable). The blocking module is configured to apply a contrast force which contrasts the movement of the central body. According to an embodiment, the blocking module is made in such a way that the blocking force applied can be modulated, that is to say, it is adjustable. Preferably, the blocking force can also be modulated in use, that is to say, during operation, to adapt, even after installation, the contrast force necessary. According to other embodiments, the contrast force can be modulated by an initial calibration, on the basis of the application of the actuator.

It should be noted, therefore, that, generally speaking, the actuator comprises a control unit or can be connected to a control unit. The control unit is configured for receiving modulating data, representing a value of the contrast force which the blocking module must apply. The control unit is programmed to generate, on the basis of the modulation data, control signals, for controlling one or more modulating means, connected to the blocking module for varying the contrast force.

An actuator of this type, besides being simple in structural terms, guarantees a high level of efficiency. In fact, the presence of the blocking module makes it possible to maintain the first or the second actuation state without the first or the second thrust component remaining in an activation state. In this way, the average life of the thrust components extends considerably, also causing an overall energy saving on the system. In other words, in order to maintain one of the actuation states of the device it is not necessary to provide any further energy pulse to the thrust components in addition to the initial activation pulse.

Moreover, a blocking module of this type makes it possible to have a wide range of applications with a standardised design of the actuator. Moreover, it allows the actuator to be adapted to successive modifications which occur within the context of a mechanical assembly which varies, for various reasons, the extent of the forces (of the loads) involved. According to an embodiment, the first and second thrust components each consist of at least one spring made of a shape memory alloy capable of exerting the thrust force as a consequence of achieving a predetermined temperature. For example, the shape memory alloy springs can be made with an alloy comprising nickel and titanium. An alloy of this type is configured, for example, to provide a change of state at a predetermined temperature within a tolerance range typically of 15°C. The activation temperature of the shape memory alloy can be suitably calibrated according to a specific application.

According to a further embodiment which can be combined with one or more preceding embodiments, the first and/or the second thrust component each consist of at least one sealed chamber in which at least one surface or panel slides connected to the central body, and activated by a pressure difference inside the chamber due to the flow of a fluid, for example air (pneumatic type) or oil (hydraulic type).

According to an embodiment which can be combined with one or more preceding embodiments, the first and/or the second thrust component can be activated and deactivated by means of an exchange of heat with the surrounding environment. In this way, by simply exchanging heat, in a free or forced fashion, for example with the surrounding air, it is possible to activate and deactivate the thrust components.

According to an embodiment which can be combined with one or more preceding embodiments, the first and/or the second thrust component is in (preferably continuous) contact with a (highly) convective liquid (that is to say, having a thermal convection coefficient such as to include it in the convective materials) and can be activated and deactivated by heat exchange with said liquid. Unlike the previous case, the heat exchange occurs with the liquid. It should be noted that this embodiment can be combined with the previous embodiment in such a way that the first thrust component can be, for example, activated and deactivated by means of an exchange of heat with the surrounding environment, such as, for example, air, whilst the second thrust component can be activated and deactivated by means of a heat exchange with a highly convective liquid, or vice versa. The use of an activation by means of heat transmission with a convective fluid further increases the variables which can be adjusted to obtain a flexible actuator. In particular, selecting the heat carrier fluid makes it possible to design the response times of the actuators, also providing a difference between the forward and return times of the element actuated on the basis of the liquid used to activate the respective first and/or second thrust element.

According to an embodiment which can be combined with one or more preceding embodiments, the first and/or the second thrust component can be activated by a Joule effect heating induced by the passage of electric current and de-activated by cooling with the exchange of heat with the surrounding environment.

According to another embodiment, which can be combined with one or more preceding embodiments, the first and/or the second thrust component is in continuous contact with a coolant and can be activated by a Joule effect heating induced by the passage of electric current and deactivated by cooling with convective exchange with said coolant.

In a similar way to that described above, these embodiments relating to the activation and deactivation of the thrust components can be combined with each other in such a way that one of the thrust components can be activated and/or deactivated by means of one of the above-mentioned embodiments whilst the other thrust component can be activated and/or deactivated using a different embodiment.

According to an embodiment which can be combined with one or more previous embodiments, the first and second thrust components are positioned at the ends of the central body, with alternating function of generating thrust force and as an antagonist component. In this way, the alternating activation of the two thrust components determines the passage from one actuation state to the other of the device.

However, it should be noted that the invention also comprises solutions wherein the first and/or the second thrust element are not necessarily connected to the end of the central body but can make contact with corresponding contact surfaces of the central body, interposed between the two ends of the central body and each facing towards the corresponding end. This makes it possible to have a central body which passes through (at least partly) the thrust elements and which can therefore connect to the element actuated along the same direction of sliding as the central body. This is advantageous in terms of compactness of the actuator which, in the case of transmission of translational motion, does not in any way require lateral extension (as clearly illustrated in the above-mentioned prior art documents).

According to an embodiment which can be combined with one or more of the preceding embodiments, in order to transfer the thrust force from the first and/or from the second thrust component to the central body in an efficient manner, the outermost end of the of the first and of the second thrust component is in contact with the external frame, whilst the innermost end of the first and second thrust component is in contact with the central body. For example, the inner end of the first and second thrust components is in contact with the above-mentioned contact surfaces made on the central body.

According to an embodiment which can be combined with one or more of the preceding embodiments, in order to generate the contrast force on the central element, the blocking module comprises a stop element. Moreover, the blocking module could comprise at least one contrast element acting with a contrast force on the stop element. Preferably, the blocking module comprises a guide. The contrast element is positioned inside a guide. The contrast element is preferably slidable inside a guide between an interference position.

The contrast force may be directed in the direction normal to a surface (facing, for example, towards the central body) of the stop element. According to a first embodiment, the contrast force is generated by the action of an elastic component positioned between the thrust element and the guide. The elastic component may be, for example, a spring element. In that case, when the contrast element is a spring, the actuator comprises a thermal conditioning system of the spring. In fact, as is known, the longitudinal elasticity modulus decreases with the increase in temperature and, therefore, a temperature variation also varies the contrast force applied by the spring. For this reason, according to this embodiment, the control unit is programmed to generate control signals which control the thermal conditioning system to vary the temperature of the spring (for example in the same way in which the temperature of the shape memory springs varies) and obtain a requested elastic force.

As an alternative to the use of an elastic element, the stop element may be placed in contact with the contrast element by means of an air chamber with pressure which can be modulated. The air chamber is positioned between the thrust element and the guide to generate a contrast force in the direction normal to a surface of the stop element. The pressure inside the air chamber generates the contrast force which is transferred from the stop element on the central body in such a way that the blocking module can perform its function in a manner similar to that described above. The pressure inside the air chamber can be adjusted externally by means of suitable inlets, in such a way as to be able to set the blocking force according to requirements.

Therefore, in this case, the actuator is connected to a pressurisation system and the control unit is programmed to generate control signals which control the pressurisation system for varying the pressure of the air chamber and obtain the requested contrast force.

In particular, in order to switch the first or the second thrust force to an axial movement to be transmitted to the device, the stop element and the transmission element are connected directly to the central body moving as one with it. In particular, according to an embodiment, the central body comprises a double cam and double dip profile which defines the stop element. On the other hand, the contrast element, in this case, is a curved element, sliding along the profile for housing on the first or the second dip of the profile.

Alternatively, in order to switch the first or the second thrust force to a rotational movement, the stop element is connected to the central body by means of a connecting rod and the transmission element is connected to the stop element.

In other words, the central body is connected to the (rotary) transmission element which includes a crank and conrod mechanism (wherein, for example, the crank is defined by a disc). Preferably, the contrast element is configured to apply the contrast force which contrasts the rotation of the crank, that is to say, in the embodiment including the disc, with a force normal to the surface of the disc, which, by friction, is blocked in rotation. According to an aspect of the invention, a method is provided for actuating a device comprising the following steps:
- moving a central body along an actuation direction between a first position and a second position;
- activating a first thrust component, connected to the central body, to generate a first thrust force acting on the central body and configured to move the central body in a first direction up to the first position;
- activating a second thrust component, connected to the central body, to generate a second thrust force acting on the central body and configured to move the central body in a second direction, opposite the first direction, to the second position;
- transmitting motion of the central body to the device to be actuated, by means of a transmission element.

According to an embodiment, the method comprises a blocking step, wherein a blocking module generates a contrast force on the central body, to keep the central body in the first and/or in the second position. According to an embodiment, in the transmission step the transmission element transmits the translating motion of the central body into a translational motion of the device actuated. According to an embodiment, in the transmission step the transmission element transmits the translating motion of the central body into a rotary motion of the device actuated. According to an embodiment, the transmission step comprises the transmission element transmitting the translational motion of the central body during a roto-translational motion of the device actuated.

Moreover, according to a preferred embodiment, the method comprises an additional transmission step, wherein an additional transmission element transfers the translational motion of the central body to a further device or to a unit of the device which is separate relative to the unit actuated by the transmission element.

According to this embodiment, there are two variants. According to a first variant, during the transmission step, the transmission element transmits the translational motion of the central body into translational motion of the device (or of the first component, element of the device) whilst, during the additional transmission step, the additional transmission element transforms the translational motion of the central body into rotary motion of the device (or of the second component, element of the device).

According to a second variant, both during the transmission and the additional transmission step, the transmission element and the additional transmission element transmit the translational motion of the central body into translational motion of the corresponding first or second component of the device.

Preferably, the transmission step and the additional transmission step are performed simultaneously, due to the same movement of the central body. According to an embodiment, the method comprises a step of modulating the contrast force. According to this embodiment, a control system (thermal conditioning system or pressurisation system) varies the contrast force varying the physical parameters applied to the blocking module, for example, on the basis of control signals generated by a control unit. For example, the blocking step comprises a step of contact (thrust) between a contrast element and the central body, on which the contrast element discharges the contrast force. Said contrast element, according to an embodiment, is thrust by an air chamber under pressure. According to this embodiment, the control unit controls the pressurisation system to allow a variation of the pressure in the air chamber and thus to modulate the contrast force.

These and other aspects of the invention will become more apparent from the following detailed description of some preferred embodiments described below.
Figure 1a-c shows a schematic representation of a bistable actuator according to the invention for transmitting an axial movement (a) shown in longitudinal cross section (b) and shown from above (c).
Figure 2a-d shows a schematic representation of a bistable actuator according to the invention for transmitting a rotational movement (a) shown in longitudinal cross section (b-c) and shown in transversal cross section (d).
Figure 3 shows an exploded schematic representation of the actuator of Figure 1a.
Figure 4 shows an exploded schematic representation of the actuator of Figure 2a.
Figures 5a-d show schematically the internal component of the actuator according to an embodiment (a, c), shown in a longitudinal section (b) and shown from above (d).
Figures 6a-d show schematically the internal component of the actuator according to another embodiment (a, c), shown in a longitudinal section (b) and shown from above (d).
Figures 7a-e show in a schematic representation the external frame of the actuator according to an embodiment, shown from above (a), shown in a longitudinal section (b) and shown laterally (c-e).
Figures 8a-e show in a schematic representation the external frame of the actuator according to another embodiment, shown from above (a), shown in a longitudinal section (b) and shown laterally (c-e).
Figures 9a-e show in a schematic representation the external frame of the actuator according to another embodiment, shown from above (a), shown in a longitudinal section (b) and shown laterally (c-e).
Figures 10a-e show in a schematic representation the external frame of the actuator according to another embodiment, shown from above (a), shown in a longitudinal section (b) and shown laterally (c-e).
Figures 11a-b show two operating conditions of the bistable actuator according to the invention for transmitting an axial movement.
Figures 12a-b show the bistable actuator with two embodiments of the blocking system and the two embodiments of the blocking system in detail (c-d) .
Figures 13a-b show two operating conditions of the bistable actuator according to the invention for transmitting a rotary movement.
Figures 14a-d show a schematic representation of a bistable actuator according to the invention for simultaneously transmitting (synchronous) a rotary movement and a translational movement (a) shown in a longitudinal cross section (b-c) and shown in a transversal cross section (d).
Figure 15 shows an exploded view of the bistable actuator of Figure 14a.

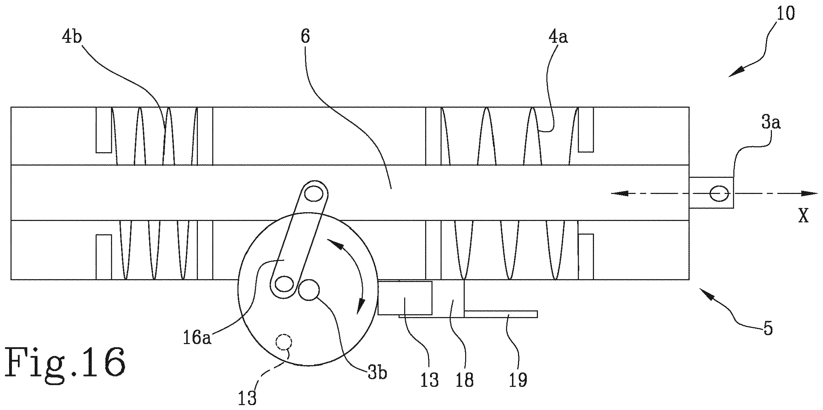

Figure 16 schematically illustrates an embodiment of the bistable actuator according to the invention.

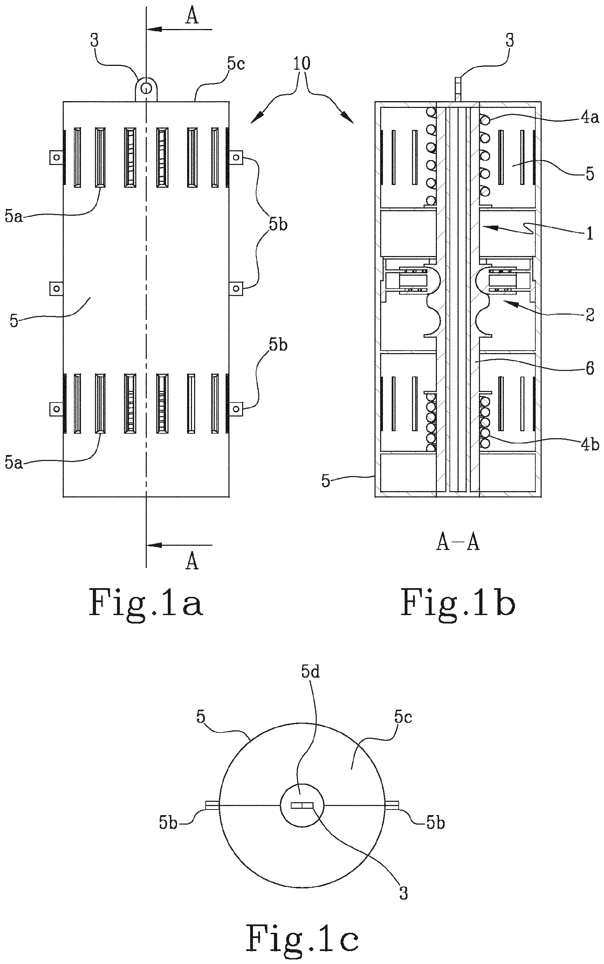

Figures 1a to 1c show a bistable actuator 10 for transmitting an axial movement to an external device to be actuated. The actuator 10 comprises an external frame 5 cylindrical in shape equipped with a plurality of vertical slots 5a located at the ends of the external frame 5. The frame 5 consists basically of two hollow semi-cylindrical parts held together by a plurality of connecting elements 5b. In the upper end (that is, at a lateral end of it), the external frame 5 comprises a surface 5c with a circular opening 5d from which the transmission element 3 protrudes, as clearly shown in the comparison between Figures 1a and 1c.

Figure 1b shows a schematic representation of the longitudinal cross section of the actuator 10 of Figure 1a along the line A-A. The actuation module 1 consists of a longitudinal element configured to apply a predetermined thrust force to the device to be actuated by means of the transmission element 3. More specifically, the actuation module 1 comprises a central body 6 slidable inside the external frame 5. The actuation module 1 also comprises a first and a second thrust component 4a, 4b, consisting of a first and a second spring made of a shape memory alloy which can be activated after reaching a predetermined temperature, that is to say, the activation temperature. For example, for a nickel or titanium spring having a dimension of 120 mm the activation occurs at a temperature of approximately 70°C.

The outermost end of the two shape memory alloy springs 4a, 4b is in contact with the external frame 5, whilst the innermost end is in contact with the central body 6, so as to transfer the thrust from the shape memory alloy springs 4a, 4b to the central body 6.

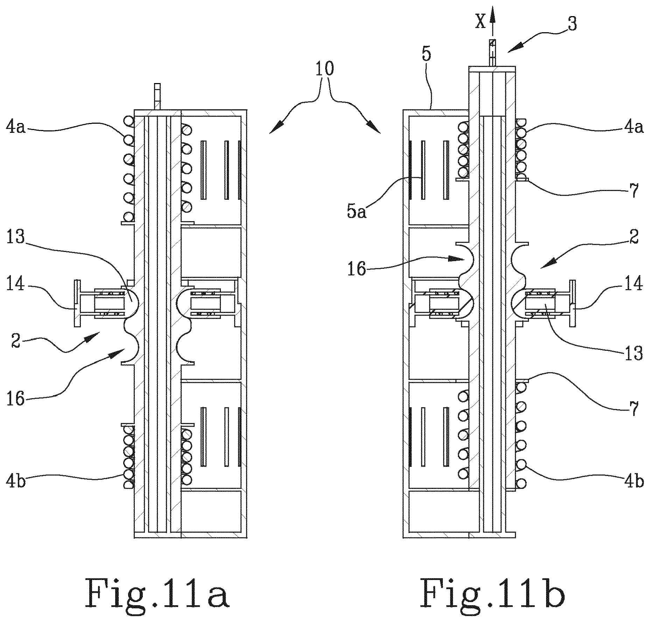

The actuation module 1 may adopt a first configuration wherein the central body 6 is completely inserted inside the frame 5 and a second configuration wherein the central body partly leaves the external frame 5 through the opening 5d (the two configurations are shown in detail in Figures 11a and 11b). The actuation module 1 adopts one of the two possible configurations each time one of the two shape memory alloy springs 4a, 4b is exposed to a sufficiently high temperature to generate a change of state, that is to say, each time the temperature of the spring exceeds the activation temperature.

The actuation module 1 is positioned in such a way that the change of shape due to the change in state of the shape memory alloy springs 4a, 4b determines the occurrence of the thrust force which acts on the device to be actuated by means of the transmission element 3.

Structurally, the central body 6 of the actuation module 1 is hollow and is made of metal material with insulating treatments (paints, sheaths which are not electrically conductive) and is equipped with an end stop 7. The shape memory alloy springs 4a 4b are housed around the two ends of the central body 6.

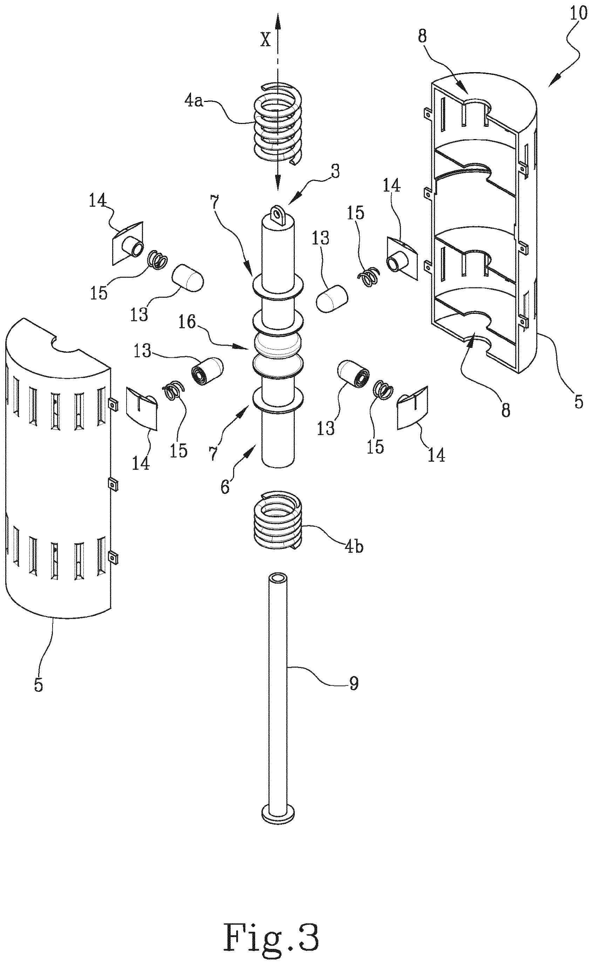

Figure 3 shows in more detail the internal components of the actuator 10 of Figures 1a-1c. In particular, the actuation module 1 is located inside the frame 5 made of non-conductive plastic material which incorporates the shape memory alloy springs 4a, 4b and which acts as an end stop 8. The actuation module 1 also comprises a guide 9 housed inside the hollow central body 6 which allows the actuation module 1 to be moved in the direction X only.

The actuator 10 comprises a blocking module 2 dedicated to maintaining the first or the second configuration even in the absence of thermal load on the shape memory alloy springs, that is to say, without the thrust components being activated.

From the structural point of view, according to an embodiment, the blocking module 2 is housed inside the frame 5 and is configured to comprise a stop element 16 and one or more contrast elements 13. The stop element 16 may be represented by a surface of the actuation module 1 or by a separate component whilst the contrast element 13 may be represented by any element which acts on said surface, such as, for example, a hemisphere which is subjected to a thrust action towards this surface.

The hemispheres 13 are housed in suitable guides 14 positioned in the frame 5.

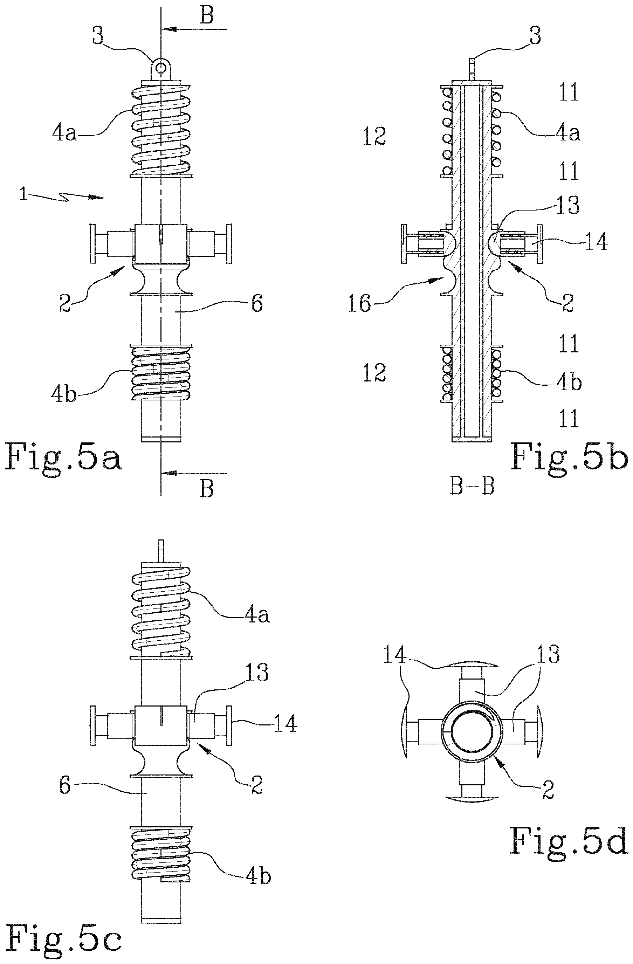

As shown in Figure 3 and in Figures 5a to 5d, the blocking module comprises four hemispheres 13 which generate a thrust in the direction normal to the surface of the stop element 16 thanks to elastic components 15, such as springs, positioned between the hemispheres 13 and the respective guides 14.

It should be noted that, in this invention and in this detailed description, the description of said elastic components 15 by way of example also refers to the protection to the embodiment wherein, instead of the elastic components, there is an air chamber and, therefore, pneumatic components (preferably with a modulating pressure). Therefore, in the entire document, the term "pneumatic components" and "elastic components" 15 can be considered interchangeable. Since in this case the stop element 16 consists of a portion of the central body 6 of the actuation module 1, that is to say, a surface equipped with a concavity of the central body 6, the contrast elements (hemispheres) 13 generate a thrust force in the direction normal to the central body 6 inserting in particular in these concavities. In other words, the thrust force generated by the contrast elements 13 is at right angles to the longitudinal direction of the actuation module 1 and is at right angles to the direction of the thrust forces generated by the thrust components (springs) 4a, 4b.

The elastic components (springs, that is, pneumatic components, that is, the air chamber) 15 are suitably calibrated to overcome the elastic forces produced by the non-activated shape memory alloy springs 4a, 4b and to contrast any external forces acting on the device to be actuated.

The stop element 16 is configured in such a way as to house inside it the hemispheres 13 when in one of the two actuation states (stable). In particular, the stop element 16 is connected to the central body 6 of the actuation module 1 moving as one with the latter.

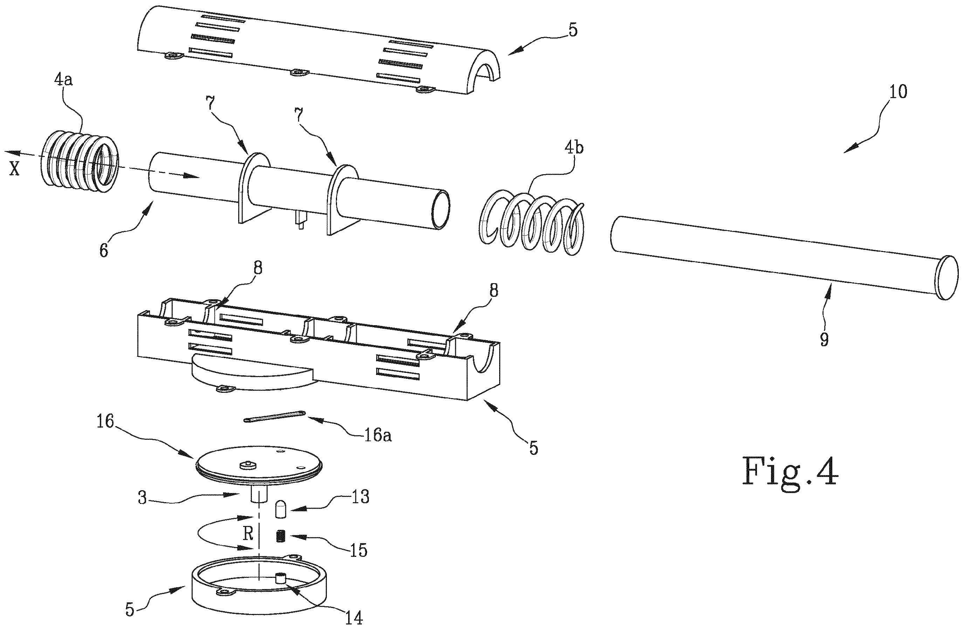

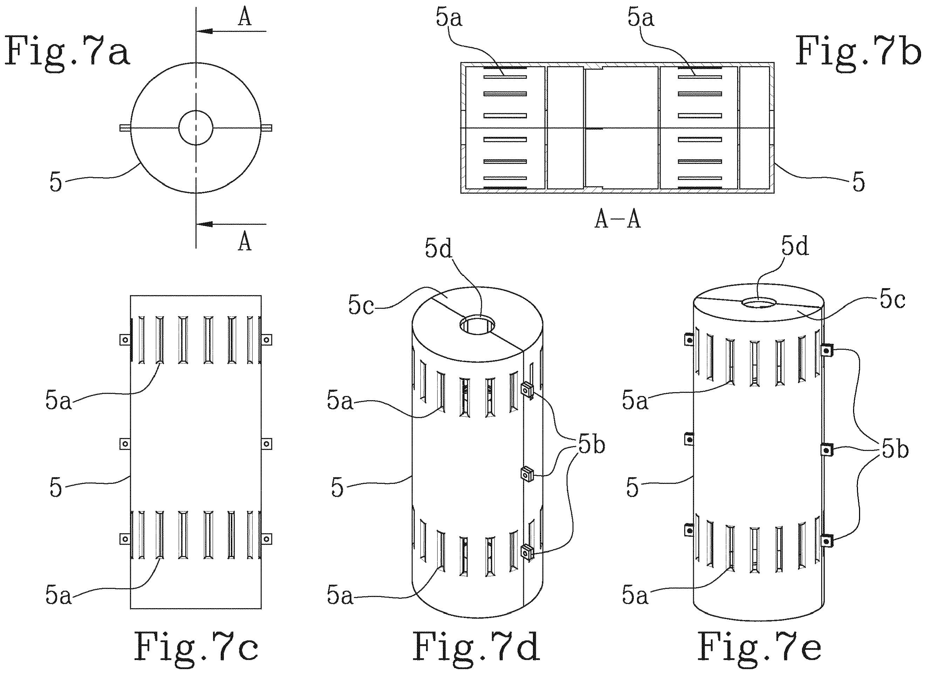

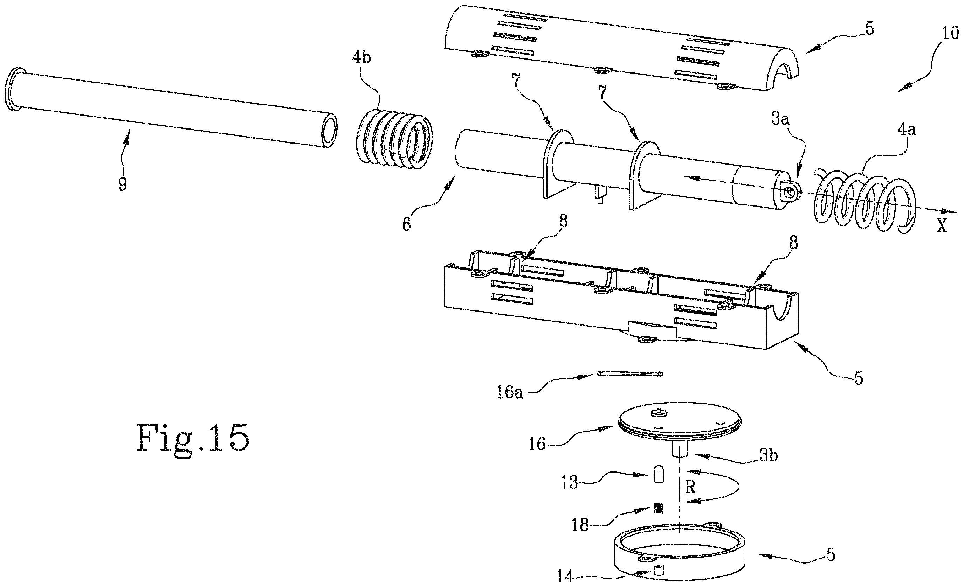

According to a further configuration, the blocking module 2 comprises a stop element 16 which may adopt the shape of a disc surface positioned along a lateral surface of the actuation module 1, that is to say, of the central body 6. More specifically, the stop element 16 is connected to the central body 6 by a connecting rod 16a such as to rotate the disc-shaped surface following the movement of the actuation module 1. In this case, the transmission element 3b, which is defined for clarity the rotary transmission element 3b, is connected to the surface of the stop element 16, for example in the form of a central pin of the disc surface (it could be considered, from a functional point of view, that the disc and the connecting rod are also part of the transmission element). For this reason, the activation of the thrust components 4a, 4b (or shape memory alloy springs), which generates a movement of the actuation module 1, and therefore of the central body 6, along the direction X (Figure 4), determines a rotation R of the disc surface of the stop element 16 and therefore a rotation of the rotary transmission element 3b. This rotary movement is therefore transferred to the device to be actuated. Figures 7a-d show the two configurations of the actuator 10 for transferring loads to the devices to be actuated. The blocking element 2 comprises a contrast element 13 in the form of a hemisphere. One or more contrast elements may be used to guarantee an efficient operation of the blocking module 2. More specifically, the contrast element 13 can generate a thrust in the direction normal to the disc surface of the stop element 16 by the action of an air chamber 18 positioned between the hemisphere 13 and a corresponding guide 14. Alternatively, as illustrated in Figure 15, the contract component 13 can act on the lateral surface of the disc. It should be noted that consequently the thrust force generated by the contrast component 13 is normal to the central body 6. The force exerted by the component 18 may be modulated in such a way as to contrast the elastic forces produced by the non-activated shape memory alloy springs 4a, 4b and any external forces acting on the device to be actuated blocking the rotation of the disc surface by the action of the contrast element on the stop element 16 in such a way as to maintain the current actuation state of the device.

In order to transfer an axial force generated by the shape memory alloy springs 4a, 4b to the device to be actuated, the transmission element 3 is directly connected to the central body 6.

Figures 11a and 11b show the two stable actuation states of the actuator 10 for transferring an axial force to the device to be actuated. In use, the exceeding of the actuation temperature of one of the two shape memory alloy springs 4b generates a change of state and a consequent generation of thrust on the central body 6 of the actuation module 1. This thrust contrasts the antagonist force generated by the second shape memory alloy spring 4a and the force resulting by the hemispheres 13 in contact with the stop element 16 generated by the elastic components (springs, that is, pneumatic components, that is, the air chamber 18) 15. The excess thrust is transferred to the transmission element 3 and to the device to be actuated.

Once the temperature of the shape memory alloy spring activated 4b falls below the activation temperature, the thrust stops. The antagonist force generated by the shape memory alloy springs 4a, 4b in their non-activated state is contrasted and overcome by the force exerted by the elastic components (springs, that is, pneumatic components, that is, the air chamber 18) 15 by the action of the hemispheres 13 on the stop element 16.

The second stable configuration is obtained by changing the second shape memory alloy spring 4a to a temperature higher than the activation temperature. This spring therefore generates a thrust designed to overcome the antagonist force generated by the first non-activated shape memory alloy spring 4b and the force resulting from the hemispheres 13 in contact with the central body 6 generated by the elastic components 15 (springs, that is, pneumatic components, that is, the air chamber 18).

In other words, each time the temperature of one of the two shape memory alloy springs 4a, 4b, whether it is due to heat convection or Joule effect, becomes greater than the temperature necessary to obtain a change of state of the shape memory alloy, the thrust force becomes greater than the contrast forces generating a movement and a thrust on the actuation module 1 and the passage from the first state of actuation to the second state of actuation. When following the cooling of the shape memory alloy spring 4a 4b the temperature falls again below the transition temperature of the shape memory alloy, the force exerted by the elastic components 15 (springs, that is, pneumatic components, that is, the air chamber 18) of the blocking module 2 by the thrust of the contrast elements (hemispheres) 13 on the central body 6 guarantees that the equilibrium position or state of actuation is maintained.

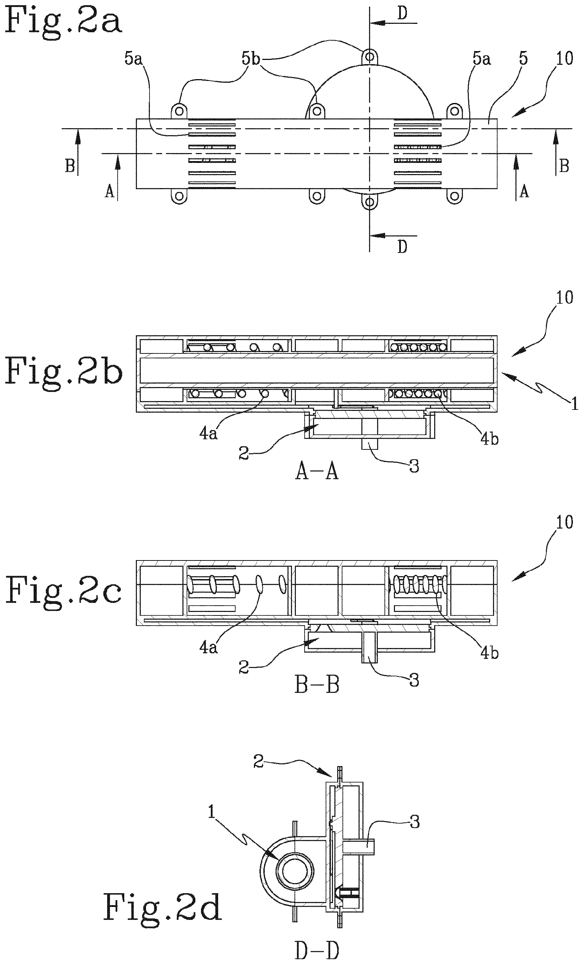

Figures 2a-2d and 4 show a bistable actuator 10 similar to that illustrated in Figures 1a to 1c and 3, wherein, however, the transmission of a rotary movement on the external device to be actuated occurs. More in detail,

Figures 2b and 2c show longitudinal cross sections along the lines A-A and B-B of Figure 2a, whilst Figure 2d shows the transversal cross section along the line D-D of Figure 2a. The basic structure of the actuation module 1 is identical to that of the actuator 10 for transmitting an axial movement. For this reason, the individual components are not described again for this different configuration of the actuator 10. Moreover, the same reference numerals are used for the components with the same functions. The substantial difference lies in the structure of the blocking module 2 and of the external frame 5.

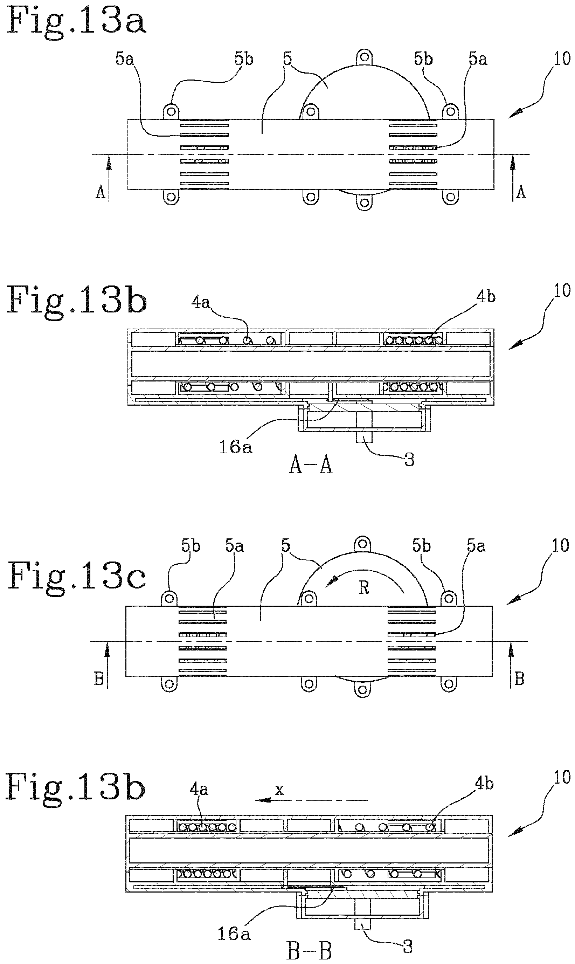

According to this configuration, the blocking module 2 comprises a stop element 16 which may adopt the shape of a disc surface positioned along a lateral surface of the actuation module 1, that is to say, of the central body 6. More specifically, the stop element 16 is connected to the central body 6 by a connecting rod 16a such as to rotate the disc-shaped surface following the movement of the actuation module 1. In this case, the transmission element 3 is connected to the surface of the stop element 16, for example in the form of a central pin of the disc surface. For this reason, in exactly the same way as described above, the activation of the thrust components 4a, 4b (or shape memory alloy springs), which generates a movement of the actuation module 1, and therefore of the central body 6, along the direction X (Figure 4), determines a rotation R of the disc surface of the stop element 16 and therefore a rotation of the transmission element 3. This rotary movement is therefore transferred to the device to be actuated. Figures 13a and 13d show the two configurations of the actuator 10 for transferring a rotary motion to the device to be actuated. In a similar way to the previous configuration, the blocking element 2 comprises an contrast element 13 in the form of a hemisphere. In this case, a single contrast element may be sufficient to guarantee an efficient operation of the blocking module 2. More specifically, the contrast element 13 can generate a thrust in the direction normal to the disc surface of the stop element 16 by the action of an elastic component (spring) 15 positioned between the hemisphere 13 and a corresponding guide 14. It should be noted that consequently the thrust force generated by the contrast component 13 is normal to the central body 6. The elastic component 15 is calibrated in such a way as to contrast the elastic forces produced by the non-activated shape memory alloy springs 4a, 4b and any external forces acting on the device to be actuated blocking the rotation of the disc surface by the action of the contrast element on the stop element 16 in such a way as to maintain the current actuation state of the device.

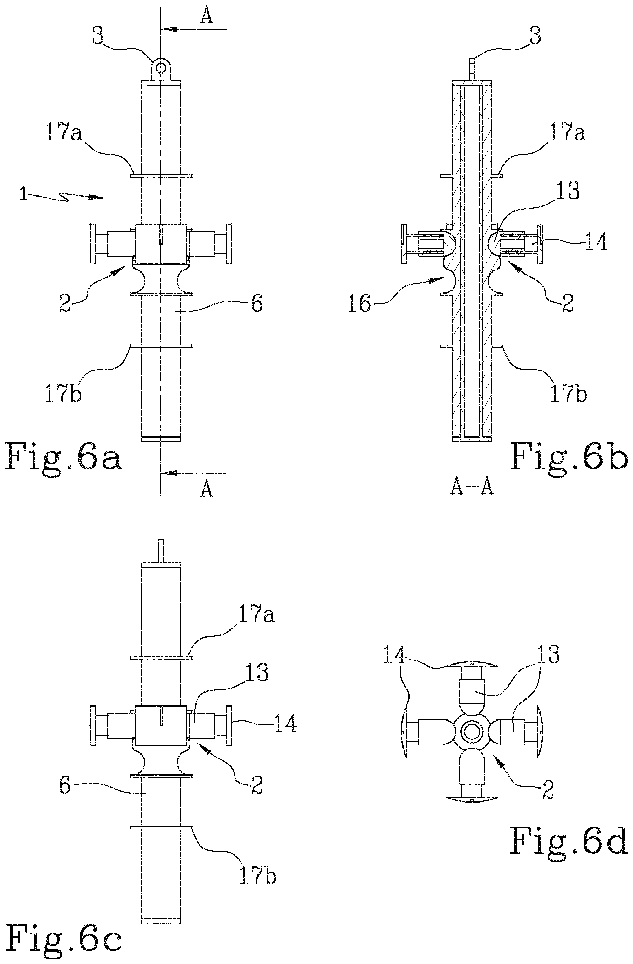

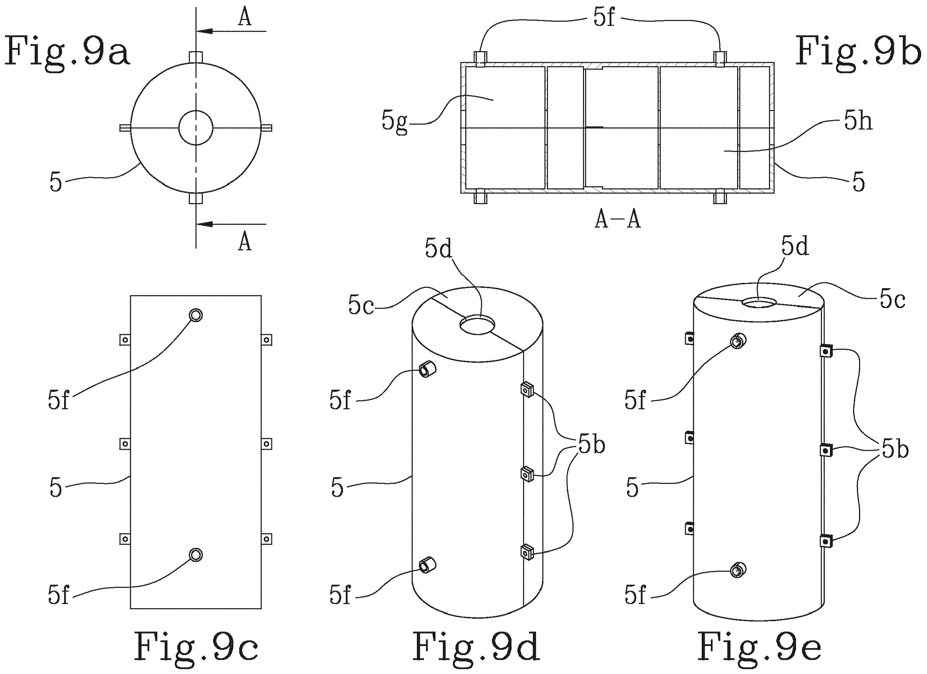

Figures 6a-6d show a bistable actuator 10 similar to that illustrated in Figures 1a-1c and 3, wherein, however, the thrust on the outer body 6 occurs through an increase in the pressure inside the chambers 5g, 5h (Figure 9b). The increase in pressure causes a thrust action on the panels 17a, 17b, similar to that of the shape memory alloy springs 4a and 4b described in the device illustrated in Figures 1a to 1c and 3. Similarly, once the pressure difference inside the chambers 5g, 5h has been removed, the stable configurations are guaranteed by the blocking system 2.

As regards the external frame 5, this is represented by the combination of a cylindrical or semi-cylindrical structure to cover the actuation module 1 and a disc-shaped structure to cover the blocking module 2, wherein the disc-shaped structure comprises an opening for the escape of the transmission element 3 which must be coupled to the device to be actuated.

The thrust components 4a and 4b can be activated and deactivated by the action of an external agent. For example, in the case of thrust components made of a shape memory material, the external agent may be heat or the passage of electrical current. For this reason, the thrust components 4a, 4b may be activated and deactivated in different ways.

In a first mode, the thrust components, that is to say, the shape memory alloy springs are activated and deactivated by exchanging heat (free or forced) with the surrounding environment, for example the air. In a second mode, the shape memory alloy springs are housed in a container containing highly convective liquid and are activated and deactivated by exchanging heat with said liquid. According to a third mode, the shape memory alloy springs are heated by the Joule effect induced by the passage of electricity and cooled by heat exchange with the surrounding environment, for example air. In a fourth mode, the shape memory alloy springs are housed in a container containing cooling liquid. The springs are heated by the Joule effect induced by the passage of electrical current and cooled by convective exchange with said cooling liquid. According to a fifth mode, the thrust components (the surfaces 17a, 17b) are activated by an increase in the pressure in the inner chambers 5g, 5h.

Considering the different methods of activating and deactivating the thrust components 4a, 4b, or the increase in pressure in the chambers 5g, 5h, the external frame 5 may be configured in a different way.

Figures 7a-7e show a configuration of the external frame 5 considering the first and third methods for activating/deactivating the thrust components 4a, 4b. The external frame 5 has a plurality of slots 5a, at the thrust components (shape memory alloy springs) 4a, 4b so as to favour heat exchange with the outside environment. The heat exchange may be free or forced, by selectively conveying the air on one of the two shape memory alloy springs.

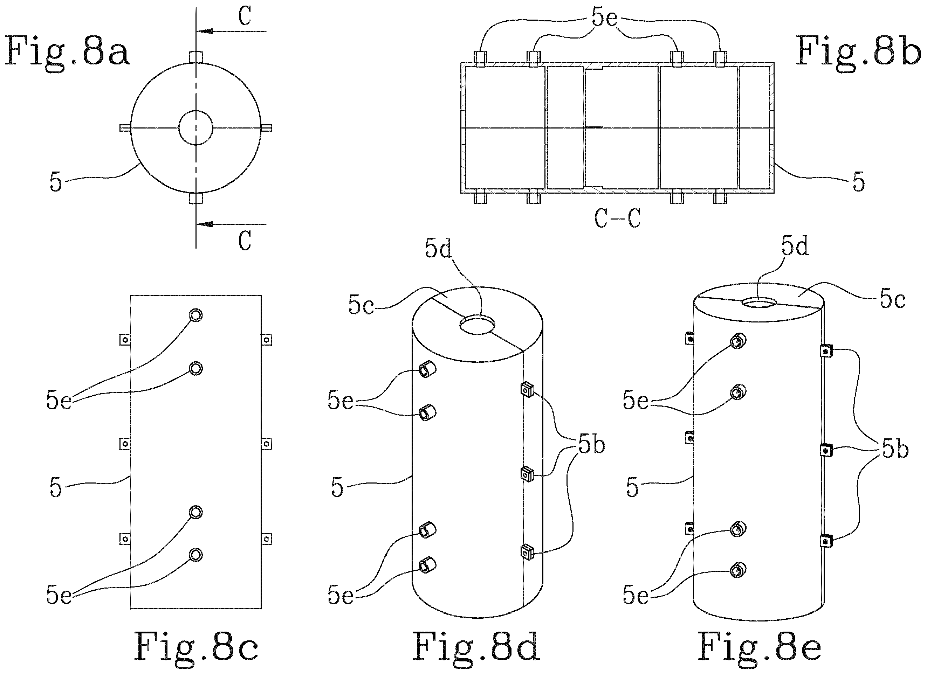

Figures 8a to 8e show, on the other hand, a configuration of the external frame 5 considering the second and fourth methods for activating/deactivating the thrust components 4a, 4b. In this case, the external frame 5 is hermetically sealed so as not to allow the outflow of the convective liquid (second mode) and/or the cooling liquid (fourth mode).

Along the lateral surfaces of the external frame 5, there are suitable inlet and outlet openings 5e for the liquid which may be coupled to an external exchange system if necessary.

Figures 9a-9e show, on the other hand, a configuration of the external frame 5 considering the fifth method for activating/deactivating the thrust components 17a, 17b (Figures 6a-d). In this case, the external frame 5 is pressurised, to allow control of the internal pressure. Along the lateral surfaces of the external frame 5, there are suitable inlet and outlet openings for air or oil 5f which allow the pressure inside the chambers 5g, 5h to be adjusted.

In the case of actuation using the Joule effect (third and fourth methods), suitable plates 11 made of conductive material are positioned in the place wherein the two thrust components 4a, 4b (shape memory alloy springs) enter into contact with the external frame 5 and with the central body 6 (Figure 5b). The plates 11 are connected by electrical cables 12 to an external power supply and act as poles for the passage of electrical charge inside the thrust component 4a, 4b, guaranteeing the heating by the Joule effect. The non-conductive plastic material the frame is made of and the coating of the central body guarantees electrical insulation with the outside environment.

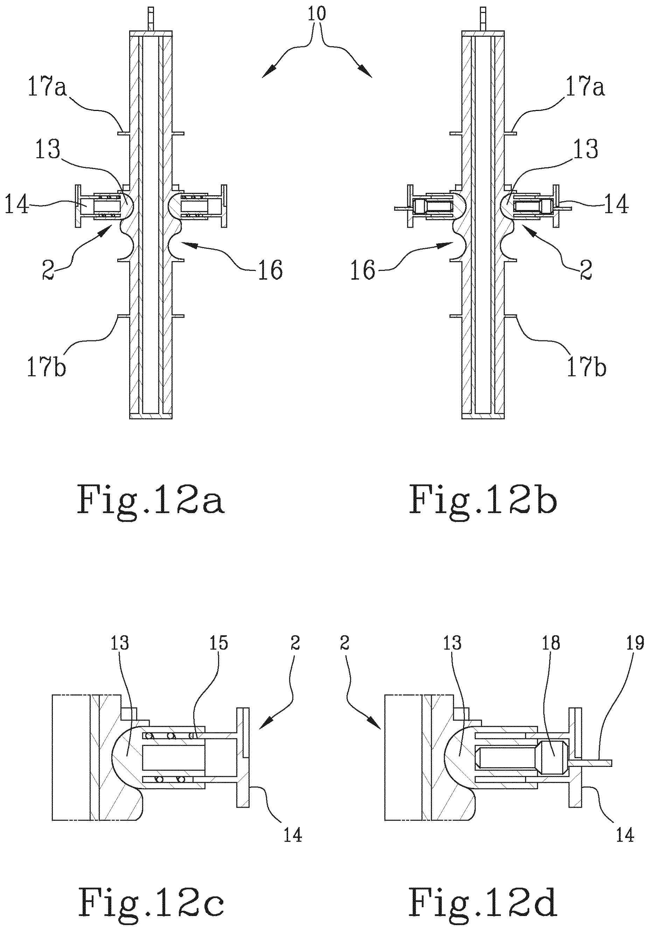

Figures 12a-b show two different configurations of the blocking device 2, shown in detail in Figures 12c-d. According to the second configuration, shown in detail in Figure 12d, the elastic component 15 is replaced by an air chamber 18. The pressure inside the air chamber 18 generates a thrust on the contrast element 13, similar to that of the springs 15 (Figure 12c).

The pressure inside the air chamber 18 can be adjusted through the inlet 19.

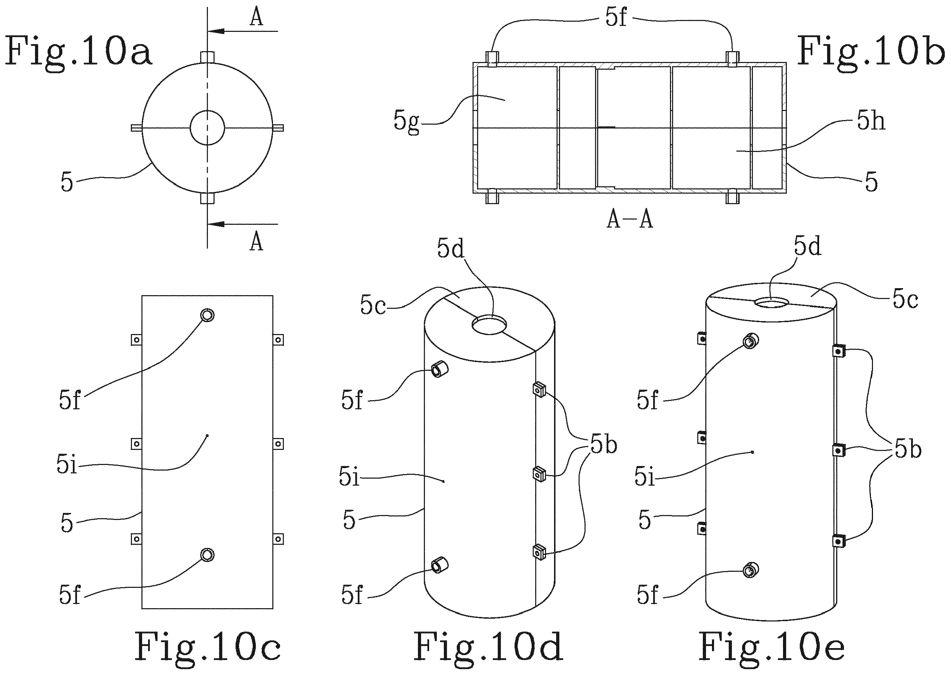

Figures 10a-e show a configuration of the frame similar to that shown in Figures 9a-e. According to this configuration there are openings 5i which allow the pressure inside the air chamber 18 to be adjusted through the inlet 19.

Advantageously, the actuator 10 described here achieves the preset aims overcoming the drawbacks highlighted in the prior art, providing the user with a bistable actuator which does not require complex electromechanical or electro-hydraulic actuation systems, thus simplifying the structure and significantly reducing the weight and dimensions.

An expert in the trade can make numerous further modifications and variations to the actuator described above, all within the scope of protection of the invention as defined in the appended claims.

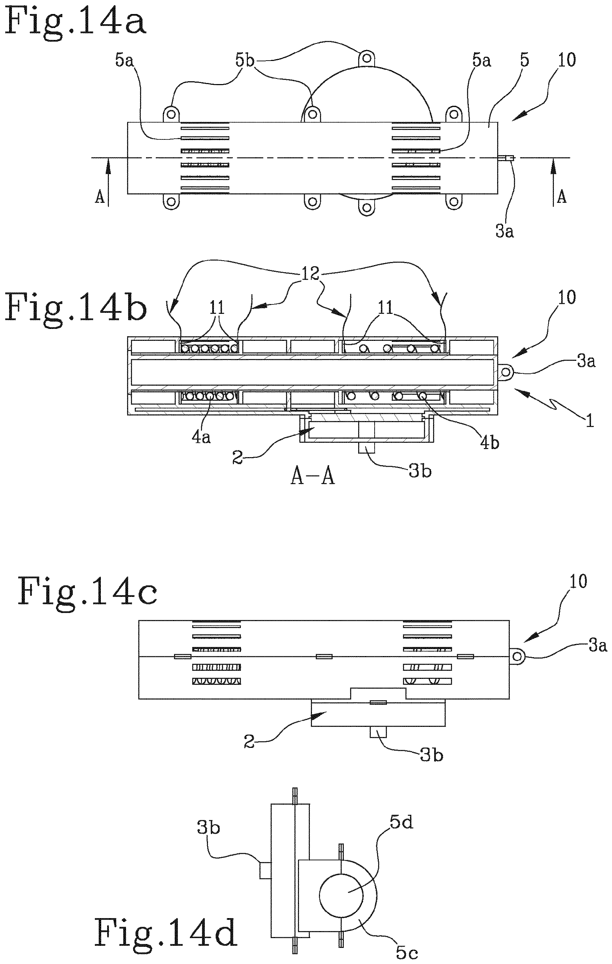

Figures 14a to 14d illustrate a third embodiment of the actuator, which combines the synchronised transmission of the translating motion and the rotational motion.

According to this embodiment, therefore, the actuator comprises both the translational transmission element 3a and the rotary transmission element 3b. For this reason, this embodiment is a combination of features, which can be selectively implemented in order to resolve specific technical problems, of the first configuration, illustrated in Figures 1a - 1d, and the second configuration (rotary), illustrated in Figures 2a to 2d.

## Claims

1. Bistable actuator (10) connectable to a device to be actuated, said actuator comprising:
an actuation module (1) for moving the device between a first state of actuation and a second state of actuation, wherein said actuation module (1) comprises a central body (6) sliding inside an external frame (5), a first thrust component that can be activated to generate a first thrust force acting on the central body (6) and to move the device in the first state of actuation and a second thrust component that can be activated to generate a second thrust force acting on the central body (6) in the opposite direction to said first thrust force and to move the device into the second actuation state; and
a transmission element (3) in mechanical connection with the central body (6) and which can be coupled to the device to be actuated to transmit to said device the first or second thrust force generated by the first or second thrust component, respectively, wherein the transmission element (3) is configured to switch said first or second thrust force into an axial movement or a rotary moment to be transmitted to the device to be activated by passing from the first to the second actuation state and vice versa, **characterized by** a blocking module (2) to generate a contrast force on the central element (6) and to keep the device to be actuated in the first or second actuation state, even in the absence of activation of the first and/or second thrust component.

2. Actuator (10) according to claim 1, wherein the first and second thrust components each consist of at least one spring (4a, 4b) made of a shape memory alloy capable of exerting the thrust force as a consequence of achieving a predetermined temperature.

3. Actuator (10) according to claim 2, wherein the first and/or second thrust component can be activated and deactivated by means of a heat exchange with the surrounding environment, or wherein the first and/or second thrust component is in continuous contact with a highly convective liquid and can be activated and deactivated through heat exchange with said liquid, or wherein the first and/or second thrust component can be activated by a heating via Joule effect induced by the passage of electric current and can be deactivated by cooling with heat exchange with the surrounding environment, or wherein the first and/or second thrust component is in continuous contact with a coolant and can be activated by heating via Joule effect induced by the passage of electric current and can be deactivated by cooling with convective exchange with said coolant.

4. Actuator according to claim 1, wherein the first and second thrust components each consist of at least one sealed chamber (5g, 5h) in which at least one surface (17a, 17b) slides connected to the central body (6).

5. Actuator according to claim 4, wherein the first and/or second thrust component can be activated and deactivated by means of a pressure variation inside the sealed chamber (5g, 5h) by introducing a fluid into said sealed chamber (5g, 5h).

6. Actuator (10) according to one of the preceding claims, wherein the first and second thrust components are positioned at the ends of the central body (6), with alternating function of generating thrust force and as antagonist component.

7. Actuator (10) according to one of the preceding claims, wherein the outermost end of the first and second thrust component is in contact with the outer frame (5), while the innermost end of the first and second component thrust is in contact with the central body (6), so as to transfer the thrust force from the first and/or second thrust component to the central body (6).

8. Actuator (10) according to one of the preceding claims, wherein the locking module (2) comprises a stop element (16) and at least one contrast element (13) acting on the stop element (16) and positioned inside a guide (14) to generate a contrast force in the direction perpendicular to a surface of the stop element (16) by means of the action of an elastic component (15) positioned between the thrust element (13) and the guide (14).

9. Actuator (10) according to one of claims 1-8, wherein the locking module (2) comprises a stop element (16) and at least one contrast element (13) acting on the stop element (16) and positioned inside a guide (14) to generate a contrast force in the direction perpendicular to a surface of the stop element (16) by means the action of an air chamber (18) with adjustable pressure positioned between the thrust element (13) and guide (14).

10. Actuator (10) according to one of claims 8-9, wherein the stop element (16) and the transmission element (3) are connected directly to the central body (6) by moving integrally thereto or wherein the stop element (16) is connected to the central body (6) by means of a connecting rod (16a) and the transmission element (3) is connected to the stop element (16).
